# EUROPEAN PATENT SPECIFICATION

(11) **EP 3 946 909 B1**
(45) Date of publication and mention of the grant of the patent: **18.10.2023**
(21) Application number: 20713042.8
(22) Date of filing: 27.03.2020
(51) Int. Cl.: F03D 1/06, B29C 70/68, B29D 99/00, B29L 31/08

(54) **MANUFACTURE OF A REINFORCED SHELL PART OF A WIND TURBINE BLADE**
HERSTELLUNG EINES VERSTÄRKTEN MANTELTEILS EINER WINDTURBINENSCHAUFEL
FABRICATION D'UNE PARTIE DE COQUE RENFORCÉE D'UNE PALE D'ÉOLIENNE

(30) Priority: 29.03.2019 EP 19166212
(43) Date of publication of application: 09.02.2022
(73) Proprietor: LM Wind Power A/S, 6000 Kolding (DK)
(72) Inventor: MADSEN, Kristian, Lehmann, 6000 Kolding (DK)
(74) Representative: COPA Copenhagen Patents
(86) International application number: PCT/EP2020/058777
(87) International publication number: WO 2020/201120

(56) References cited:
- WO-A1-2013/178228
- WO-A1-2016/198075
- WO-A1-2017/088885
- US-A1- 2018 216 601

## Description

### FIELD OF THE INVENTION

The present disclosure relates to manufacture of a reinforced shell part of wind turbine blades. More specifically, the present disclosure pertains to the field of manufacturing a reinforced shell part with a pultrusion layer and a preform for an inlay, such as a preform for a first inlay and/or a second inlay.

### BACKGROUND OF THE INVENTION

Wind turbine blades of fibre-reinforced polymer and in particular the aerodynamic shells of wind turbine blades usually comprise a reinforced section comprising pultrusion layer extending in the spanwise direction of the wind turbine blade. During manufacture of the wind turbine blade two half shells are manufactured by laying out glass fibre mats to form a half shell, and carbon fibre mats are laid out on top of the glass fibre mats to form a pultrusion layer. Optionally, an additional base layer of glass fibres forming a base part is laid out on the shell before the pultrusion layer is laid on top of the base part. Afterwards, the layers are infused with a resin, such as polyester or epoxy. Infusion of the fibres may be provided by vacuum assisted resin transfer moulding (VARTM). One of the two halves is then turned upside down and positioned on top of the other of the two halves, and the two halves are adhered together. The blade parts may be positioned on top of each other by turning and repositioning the complete half mould.

During the vacuum assisted resin transfer moulding process fibres may be compressed and cause wrinkles. Especially glass fibres are more prone to compression when they are arranged underneath a pultrusion layer, and the wrinkles most often occur in the glass fibre layers near the edges of the pultrusion layer, as the more compact carbon fibres of the pre-cured pultrusion layer compress less than the underlying glass fibres. Wrinkles are undesirable, as they decrease the stiffness and strength of a wind turbine blade.

WO 2017/088885 A1 discloses a method of making a wind turbine blade by providing a plurality of dry plies comprising dry structural fibrous material and a plurality of prepreg plies comprising structural fibrous material impregnated with resin. The plurality of dry plies and the plurality of prepreg plies are arranged in the mould to form a plurality of layers of the laminate structure of the outer shell of the blade.

WO 2013/178228 A1 describes a structural shell for a wind turbine blade formed from one or more elongate reinforcing members, each in the form of a stack of pultruded fibrous composite strips positioned between two layers of structural foam.

US 2018/0216601 A1 discloses a method for forming a wind turbine rotor blade including placing first and second prefabricated skin panels defining a portion of a root section of the wind turbine rotor blade, a pressure side of the wind turbine rotor blade, or a suction side of the wind turbine rotor blade in a mould.

WO 2016/198075 A1 relates to a modular wind turbine blade comprising first and second blade modules having spar caps embedded within their outer shells. During layup and moulding of the outer shells, spar caps are supported on top of the tapered portion of the elongate feature.

There is a need to decrease the occurrence of wrinkles in the shell and/or the base part.

It is an object of the present disclosure to provide an enhanced method for manufacturing a reinforced shell part for a wind turbine blade. It is a further objective of the present disclosure to provide a wind turbine blade comprising a reinforced section which overcomes at least some of the disadvantages of the prior art.

In particular, it is an object of the present invention to provide a method for manufacturing a reinforced shell part for a wind turbine blade and a wind turbine blade comprising a reinforced section without wrinkles in the shell and/or base part of the reinforced section.

### SUMMARY OF THE INVENTION

The present inventors have found that one or more of the above-identified objects can be addressed by providing a first inlay and a second inlay under the edges of the pultrusion layer of the reinforced section, thereby avoiding compression of the glass fibres of the shell and/or base part near the edges of the pultrusion layer.

Accordingly, in a first aspect, the present invention relates to a method for manufacturing a reinforced shell part for a wind turbine blade, the method comprising providing a shell, such as a shell half, having an inner surface, optionally arranging a plurality of fibre layers on the inner surface of the shell to form a base part of a reinforced section, providing a preform of a first inlay, arranging the preform of the first inlay on the inner surface of the shell and/or on the base part of the reinforced section, providing a preform of a second inlay, arranging the preform of the second inlay on the inner surface of the first shell part and/or on the base part of the reinforced section, arranging at least one pultrusion layer on the preform of the first inlay, on the preform of the second inlay, and on the inner surface of the shell and/or the base part of the reinforced section, wherein the pultrusion layer comprises a plurality of pultruded members grouped together, the pultrusion layer having a proximal edge, a distal edge and two opposing lateral edges, and wherein the pultrusion layer is arranged in a spanwise direction of the blade such that the proximal edge of the pultrusion layer is arranged on the preform of the first inlay and the distal edge of the pultrusion layer is arranged on the preform of the second inlay.

According to a preferred embodiment, the present invention relates to a method for manufacturing a reinforced shell part for a wind turbine blade, the method comprising providing a shell, such as a shell half, having an inner surface, optionally arranging a plurality of fibre layers on the inner surface of the shell to form a base part of a reinforced section, providing a preform of a first inlay, arranging the preform of the first inlay on the inner surface of the shell and/or on the base part of the reinforced section, wherein the top surface of the first inlay is substantially flush with the surrounding inner surface of the shell or with the top surface of the base part of the reinforced section, providing a preform of a second inlay, arranging the preform of the second inlay on the inner surface of the first shell part and/or on the base part of the reinforced section, wherein the top surface of the second inlay is substantially flush with the surrounding inner surface of the shell or with the top surface of the base part of the reinforced section, arranging at least one pultrusion layer on the preform of the first inlay, on the preform of the second inlay, and on the inner surface of the shell and/or the base part of the reinforced section, wherein the pultrusion layer comprises a plurality of pultruded members grouped together, the pultrusion layer having a proximal edge, a distal edge and two opposing lateral edges, and wherein the pultrusion layer is arranged in a spanwise direction of the blade such that the proximal edge of the pultrusion layer is arranged on the preform of the first inlay and the distal edge of the pultrusion layer is arranged on the preform of the second inlay.

According to a preferred embodiment, the present invention relates to a method for manufacturing a reinforced shell part for a wind turbine blade, the method comprising providing a shell, such as a shell half, having an inner surface, optionally arranging a plurality of fibre layers on the inner surface of the shell to form a base part of a reinforced section, providing a preform of a first inlay, arranging the preform of the first inlay on the inner surface of the shell, wherein the top surface of the first inlay is substantially flush with the top surface of the base part of the reinforced section, providing a preform of a second inlay, arranging the preform of the second inlay on the inner surface of the first shell part, wherein the top surface of the second inlay is substantially flush with the top surface of the base part of the reinforced section, arranging at least one pultrusion layer on the preform of the first inlay, on the preform of the second inlay, and on the inner surface of the shell and/or the base part of the reinforced section, wherein the pultrusion layer comprises a plurality of pultruded members grouped together, the pultrusion layer having a proximal edge, a distal edge and two opposing lateral edges, and wherein the pultrusion layer is arranged in a spanwise direction of the blade such that the proximal edge of the pultrusion layer is arranged on the preform of the first inlay and the distal edge of the pultrusion layer is arranged on the preform of the second inlay.

Thus, according to the present invention, a preform may be introduced to the shell or to the base part near the edges of the pultrusion layer during manufacture. The preform may comprise a stack of pre-cured glass fibre mats and has a stiffer property than glass fibre mats of the shell or base part before infusion and may thus remedy occurrences of wrinkles.

The reinforced shell part may be a reinforced shell half, such as a reinforced upwind shell half or a reinforced downwind shell half. Such shell parts usually comprise a reinforced section, such as a spar cap or a main laminate. The shell provided in the method of the present invention may be a shell half, such as an upwind shell half or a downwind shell half. Typically, a shell or shell half comprises an aerodynamic outer surface and an opposing inner surface. In a preferred embodiment, the shell comprises a fibre material infused by resin and subsequently cured, for example forming a fibre laminate. The shell or shell half may optionally comprise a sandwich material. For example, the shell may comprise an outer fibre reinforced layer forming an outer surface and an inner reinforced layer forming an inner surface, the outer fibre reinforced layer and the inner reinforced layer separated by a sandwich material forming a core. The core material may of balsa wood or foam material. Alternatively, part of the shell may comprise fibre reinforced material only, forming the outer surface and the inner surface of the shell. In the method of the present invention, one or more fibre layers may be provided on the inner surface of the shell or shell half to form a base part of a reinforced section, such as a base part of a spar cap.

Providing a shell may comprise providing a shell comprising an outer surface, an inner surface and a sandwich material arranged between the outer surface and the inner surface. Alternatively, providing a shell may comprise providing a shell comprising a fibre reinforced layer and without a sandwich material, such that the fibre reinforced layer forms an outer surface and an inner surface of the shell.

The method of the present invention also comprises providing respective preforms of a first and of a second inlay. Typically, a preform is a shaped arrangement of fibres, such as multiple layers thereof, which has been bound and/or consolidated for later use as part of a fibre lay-up for example in a blade mould. The preforms of the present invention may have a substantially rectangular or cuboid shape. In a preferred embodiment, the preform comprises a fibre material and a binding agent.

The method of the present invention may comprise arranging the preform of the first inlay and the preform of the second inlay on the inner surface of the shell, such as on the inner surface of a shell half. In other embodiments, when the reinforced section is to comprise a base part underneath the pultrusion layer, the preforms of the first and second inlay are arranged on the previously arranged base part of the later reinforced section.

While the pultrusion layer is usually arranged in a substantially spanwise or longitudinal direction of the blade, the first and second preforms/inlays are typically arranged substantially perpendicular to the spanwise direction. Thus, the longest dimension of the preform/inlay usually extends substantially perpendicularly to the spanwise direction.

The method of the present invention also comprises arranging at least one pultrusion layer on the respective preforms of the first and second inlays. The pultrusion layer typically comprises a plurality of pultruded members grouped together. The pultrusion layer has a proximal edge, which is usually closest to the root end of the final blade, and a distal edge, which is usually closest to the tip end of the final blade, and two opposing lateral edges. The pultrusion layer is arranged in a spanwise direction of the blade such that the proximal edge of the pultrusion layer is arranged on the preform of the first inlay and the distal edge of the pultrusion layer is arranged on the preform of the second inlay.

In a preferred embodiment, the first and second preforms/inlays are received in respective recesses provided in the inner shell surface or in the base part of the reinforced section. Thus, the top surface of the preform/inlay is preferably substantially flush with the surrounding inner surface of the shell or with the top surface of the base part of the reinforced section.

In another aspect, the present invention relates to a wind turbine blade having a profiled contour including a pressure side and a suction side, and a leading edge and a trailing edge with a chord having a chord length extending therebetween. The wind turbine blade extends in a spanwise direction between a root end and a tip end. The wind turbine blade comprises a shell part, such as a downwind shell half and an upwind shell half, a reinforced section, such as a spar cap or a main laminate, extending along at least part of the shell part in a spanwise direction of the blade.

The reinforced section of the blade comprises a plurality of pultruded members grouped together to form at least one pultrusion layer extending in a spanwise direction of the blade. The pultrusion layer has a proximal edge closest to the root end of the blade, a distal edge closest to the tip end of the blade and two opposing lateral edges extending in a spanwise direction of the blade.

The wind turbine blade of the present invention preferably comprises a first inlay arranged underneath part of the pultrusion layer such that it extends along the entire proximal edge of the pultrusion layer, and a second inlay arranged underneath part of the pultrusion layer such that it extends along the entire distal edge of the pultrusion layer.

According to another preferred embodiment, the present invention relates to a wind turbine blade having a profiled contour including a pressure side and a suction side, and a leading edge and a trailing edge with a chord having a chord length extending therebetween. The wind turbine blade extends in a spanwise direction between a root end and a tip end. The wind turbine blade comprises a shell part, such as a downwind shell half and an upwind shell half, a reinforced section, such as a spar cap or a main laminate, extending along at least part of the shell part in a spanwise direction of the blade.

The reinforced section of the blade comprises a plurality of pultruded members grouped together to form at least one pultrusion layer extending in a spanwise direction of the blade. The pultrusion layer has a proximal edge closest to the root end of the blade, a distal edge closest to the tip end of the blade and two opposing lateral edges extending in a spanwise direction of the blade.

The wind turbine blade of the present invention preferably comprises a first inlay arranged underneath part of the pultrusion layer such that it extends along the entire proximal edge of the pultrusion layer, and wherein the top surface of the first inlay is substantially flush with the surrounding inner surface of the shell or with the top surface of the base part of the reinforced section, and a second inlay arranged underneath part of the pultrusion layer such that it extends along the entire distal edge of the pultrusion layer, and wherein the top surface of the second inlay is substantially flush with the surrounding inner surface of the shell or with the top surface of the base part of the reinforced section.

According to another preferred embodiment, the present invention relates to a wind turbine blade having a profiled contour including a pressure side and a suction side, and a leading edge and a trailing edge with a chord having a chord length extending therebetween. The wind turbine blade extends in a spanwise direction between a root end and a tip end. The wind turbine blade comprises a shell part, such as a downwind shell half and an upwind shell half, a reinforced section, such as a spar cap or a main laminate, extending along at least part of the shell part in a spanwise direction of the blade.

The reinforced section of the blade comprises a plurality of pultruded members grouped together to form at least one pultrusion layer extending in a spanwise direction of the blade. The pultrusion layer has a proximal edge closest to the root end of the blade, a distal edge closest to the tip end of the blade and two opposing lateral edges extending in a spanwise direction of the blade.

The wind turbine blade of the present invention preferably comprises a first inlay arranged underneath part of the pultrusion layer such that it extends along the entire proximal edge of the pultrusion layer, and wherein the top surface of the first inlay is substantially flush with the top surface of the base part of the reinforced section, and a second inlay arranged underneath part of the pultrusion layer such that it extends along the entire distal edge of the pultrusion layer, and wherein the top surface of the second inlay is substantially flush with the top surface of the base part of the reinforced section.

It is an advantage of the present disclosure that wrinkles in the shell and/or base part can be avoided. It is a further advantage of the present disclosure that the preform has the same or similar material properties as the shell and/or base part and that the material is light weight.

The preform of the first inlay and/or second inlay may extend in a substantially chordwise direction. The preform of the first and/or second inlay may comprise a fibre material. The preform of the first inlay may comprise sheets of fibres, such as sheets of fibres or fibre mats or glass fibre mats. The preform of the first inlay may comprise a stack of sheets, such as a stack of sheets of glass fibres. Alternatively, the preform of the first inlay may comprise glass fibres, carbon fibres, aramid fibres, basalt fibres, natural fibres or mixtures thereof. The preform of the first inlay may comprise a stack of sheets of glass fibres comprising a binding agent.

It is an advantage of the present disclosure that preforms are provided. Preforms may be manufactured offline, which may reduce the in-mould manufacturing time of a wind turbine blade. In addition, manufacturing the preforms offline may provide preforms of higher quality and uniformity.

In a preferred embodiment, the preform/inlay of the present invention may have a chamfered edge. The distal ends of each sheet of fibre of the preform/inlay may be chamfered. The proximal ends of each sheet of fibre of the preform/inlay may be chamfered.

The thickness of the preform of the first inlay may taper towards the distal edge. The thickness of the preform of the first inlay may taper towards the proximal edge. The thickness of the preform of the first inlay may taper towards the distal edge and the proximal edge in the same direction. Alternatively, the thickness of the preform of the first inlay may taper towards the distal edge and the proximal edge in the opposite direction.

The preform of the second inlay may extend in a substantially chordwise direction. The preform of the second inlay may comprise a fibre material. The preform of the second inlay may comprise sheets of fibres, such as sheets of fibres or fibre mats or glass fibre mats. The preform of the second inlay may comprise a stack of sheets, such as a stack of sheets of glass fibres. Alternatively, the preform of the second inlay may comprise glass fibres, carbon fibres, aramid fibres, basalt fibres, natural fibres or mixtures thereof. The preform of the second inlay may comprise a stack of sheets of glass fibres comprising a binding agent. The distal ends of each sheet of fibre may be chamfered. The proximal ends of each sheet of fibre may be chamfered.

The thickness of the preform of the second inlay may taper towards the distal edge. The thickness of the preform of the second inlay may taper towards the proximal edge. The thickness of the preform of the second inlay may taper towards the distal edge and the proximal edge in the same direction. Alternatively, the thickness of the preform of the second inlay may taper towards the distal edge and the proximal edge in the opposite direction.

The preform of the third inlay may extend in a substantially chordwise direction. The preform of the third inlay may comprise a fibre material. The preform of the third inlay may comprise sheets of fibres, such as sheets of fibres or fibre mats or glass fibre mats. The preform of the third inlay may comprise a stack of sheets, such as a stack of sheets of glass fibres. Alternatively, the preform of the third inlay may comprise glass fibres, carbon fibres, aramid fibres, basalt fibres, natural fibres or mixtures thereof. The preform of the third inlay may comprise a stack of sheets of glass fibres comprising a binding agent. The distal ends of each sheet of fibre may be chamfered. The proximal ends of each sheet of fibre may be chamfered.

The thickness of the preform of the third inlay may taper towards the distal edge. The thickness of the preform of the third inlay may taper towards the proximal edge. The thickness of the preform of the third inlay may taper towards the distal edge and the proximal edge in the same direction. Alternatively, the thickness of the preform of the third inlay may taper towards the distal edge and the proximal edge in the opposite direction.

The preform of the fourth inlay may extend in a substantially chordwise direction. The preform of the fourth inlay may comprise a fibre material. The preform of the fourth inlay may comprise sheets of fibres, such as sheets of fibres or fibre mats or glass fibre mats. The preform of the fourth inlay may comprise a stack of sheets, such as a stack of sheets of glass fibres. Alternatively, the preform of the fourth inlay may comprise glass fibres, carbon fibres, aramid fibres, basalt fibres, natural fibres or mixtures thereof. The preform of the fourth inlay may comprise a stack of sheets of glass fibres comprising a binding agent. The distal ends of each sheet of fibre may be chamfered. The proximal ends of each sheet of fibre may be chamfered.

The thickness of the preform of the fourth inlay may taper towards the distal edge. The thickness of the preform of the fourth inlay may taper towards the proximal edge. The thickness of the preform of the fourth inlay may taper towards the distal edge and the proximal edge in the same direction. Alternatively, the thickness of the preform of the fourth inlay may taper towards the distal edge and the proximal edge in the opposite direction.

The sheets of fibres stacked to form a preform of an inlay may be prefabricated with a binding agent. Alternatively, the sheets may be dry fabric. Alternatively, the sheets may be a prepreg. The binding agent may be a thermoplastic binding agent. The binding agent may be a binding powder, such as a thermoplastic binding powder.

Stacking the sheets may comprise applying a binding agent to the fabric. Stacking the sheets may comprise stacking sheets with a desired size to form a desired size of the preform. Stacking sheets may comprise stacking sheets and cutting out the preform of the desired size. Stacking the sheets may comprise arranging the sheets in a mould.

In a preferred embodiment, the preforms of the present invention comprise glass fibres. Alternatively, or in addition, the preforms may comprise carbon fibres. In some embodiments, the preforms may comprise glass fibres, carbon fibres, aramid fibres, basalt fibres, natural fibres or mixtures thereof. The binding agent may present in an amount of 0.1 -15 wt% relative to the weight of the fibre material of the preform. Preferably, the binding agent is present in an amount of 0.5-10 wt%, preferably 0.5-5 wt%, more preferably 0.5-3.5 wt%, relative to the weight of the fibre material. The binding agent may also comprise two or more different substances, as long as the total binding agent is present in an amount of 0.1 - 15 wt% relative to the weight of the fibres. The mixture between fibres and binding agent is such that at least 75%, more preferably at least 90%, most preferably at least 95% of the surface of the fibre sheets is contacted with the binding agent.

The sheets may be consolidated or precured by e.g. by heating, to attach the sheets to each other, and to form a preform of an inlay. After consolidation the preforms obtain a higher stiffness and strength. Alternatively, the sheets may be infused during the infusion process of the wind turbine blade, to form an inlay. The adhesive of the sheets may be configured to be dissolved by the resin as it is infused, such that the adhesive is replaced by resin during the infusion process.

The preforms may constitute part of the reinforced section, such as a spar cap or main laminate, of the wind turbine blade.

In a preferred embodiment, each preform/inlay has a length of 20-100 cm, a width of 30-150 cm and a thickness of 0.5-10 mm. The pultrusion layer typically has a length of 40-80 m, a width of 20-100 cm and a thickness of 5-80 mm. The base part typically has a thickness of 0.5-30 mm, such as 4-30 mm.

Providing a preform of a first inlay may comprise pre-curing the preform of the first inlay. Providing a preform of a second inlay may comprise pre-curing the preform of the second inlay.

The shell may comprise a root end and a tip end, and the preform of the first inlay may be arranged closer to the root end of the shell than the preform of the second inlay.

The pultrusion layer may be arranged such that its proximal edge is closer to the root end of the shell than its distal end.

The preform of the first inlay may be arranged such that it extends along the entire proximal edge of the pultrusion layer. The preform of the second inlay may be arranged such that it extends along the entire distal edge of the pultrusion layer.

Each of the preforms may have a proximal edge, a distal edge, and two opposing lateral edges. The preform of the first inlay may be arranged such that its proximal edge is closer to the root end of the shell than the proximal edge of the pultrusion layer. The preform of the second inlay may be arranged such that its distal edge is closer to the tip end of the shell than the distal edge of the pultrusion layer.

The distal edge of the preform of the first inlay may be longer than the proximal edge of the pultrusion layer. The proximal edge of the preform of the second inlay may be longer than the distal edge of the pultrusion layer.

The method may comprise infusing the pultrusion layer, the preform of the first inlay, the preform of the second inlay, and optionally the base part of the reinforced section with a resin to form a reinforced section of the first shell part the wind turbine blade.

The method may comprise manufacturing two reinforced shell parts. The method may comprise joining the two reinforced shell parts to form a wind turbine blade.

A preform of a third inlay may be arranged on top of at least part of the pultrusion layer such that it extends along the entire proximal edge of the pultrusion layer. The preform of the third inlay may extend in a substantially chordwise direction. The preform of the third inlay may be arranged closer to the root end of the shell than the preform of the fourth inlay.

A preform of a fourth inlay is may be arranged on top of at least part of the pultrusion layer such that it extends along the entire distal edge of the pultrusion layer. The preform of the fourth inlay each may extend in a substantially chordwise direction. The preform of the fourth inlay may be arranged closer to the tip end of the shell than the preform of the fourth inlay.

In some embodiments, the edges of the reinforced section are chamfered. In a preferred embodiment, the edges of the preform are chamfered. The fibre layers of the reinforced section may be chamfered at a distal end. The fibre layers of the reinforced section may be chamfered at a proximal end.

A third inlay may be arranged on top of at least part of the pultrusion layer such that it extends along the entire proximal edge of the pultrusion layer. The third inlay may be arranged on top of at least part of the first inlay. The third inlay may be arranged on top of at least part of the shell part. The thickness of the third inlay may taper from A fourth inlay may be arranged on top of at least part of the pultrusion layer such that it extends along the entire distal edge of the pultrusion layer. The fourth inlay may be arranged on top of at least part of the second inlay. The fourth inlay may be arranged on top of at least part of the shell part. The preform of the third inlay may be arranged closer to the root end of the blade than the preform of the fourth inlay.

It is envisaged that any embodiments or elements as described in connection with any one aspect may be used with any other aspects or embodiments, mutatis mutandis.

### BRIEF DESCRIPTION OF THE FIGURES

Embodiments of the invention will be described in more detail in the following with regard to the accompanying figures. Like reference numerals refer to like elements throughout. Like elements may, thus, not be described in detail with respect to the description of each figure. The figures show one way of implementing the present invention and are not to be construed as being limiting to other possible embodiments falling within the scope of the attached claim set. In addition, an illustrated embodiment need not have all the aspects or advantages shown. An aspect or an advantage described in conjunction with a particular embodiment is not necessarily limited to that embodiment and can be practiced in any other embodiments even if not so illustrated, or if not so explicitly described.
Fig. 1 is a schematic diagram illustrating an exemplary wind turbine,
Fig. 2 is a schematic diagram illustrating an exemplary wind turbine blade,
Fig. 3 is a schematic diagram illustrating a cross section of an exemplary wind turbine blade,
Fig. 4 is a schematic diagram illustrating an exemplary wind turbine blade,
Fig. 5 is a schematic diagram illustrating an exemplary inlay,
Fig. 6a-6b are schematic diagrams illustrating an exemplary part of a wind turbine blade,
Fig. 7a-7g are schematic diagrams illustrating an exemplary part of a wind turbine blade,
Fig. 8a-8d are schematic diagrams illustrating an exemplary part of a wind turbine blade, and
Fig. 9 is a block diagram of an exemplary method of manufacturing wind turbine blade.

### DETAILED DESCRIPTION

In the following figure description, the same reference numbers refer to the same elements and may thus not be described in relation to all figures.

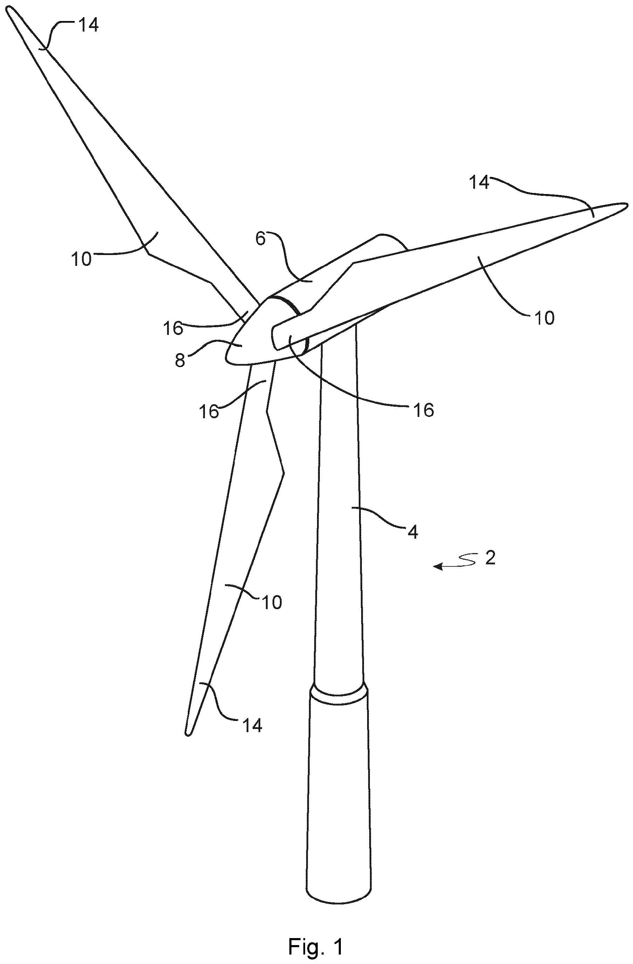

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

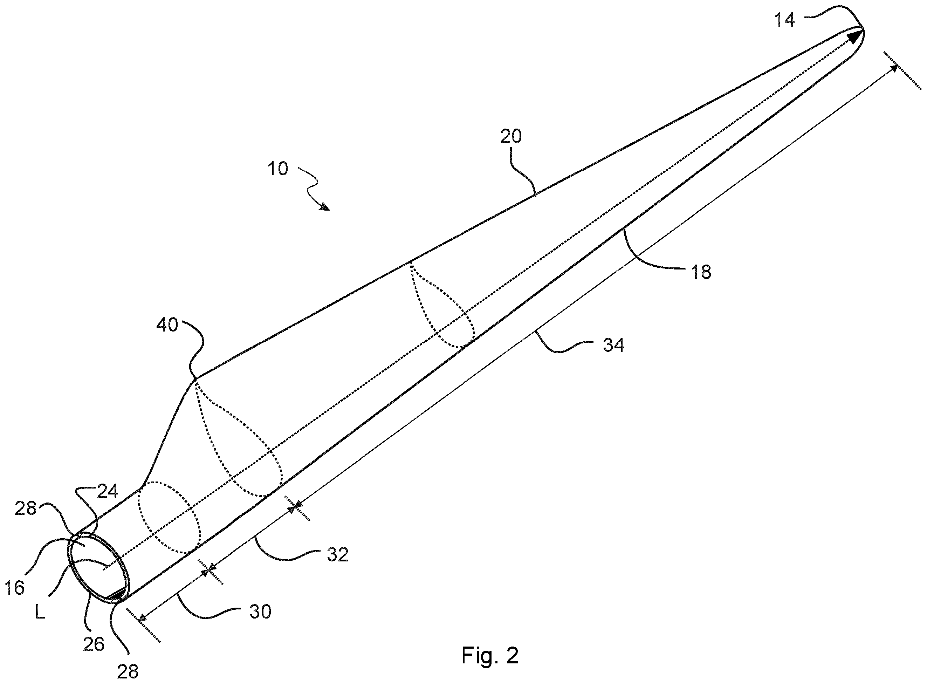

Fig. 2 shows a schematic view of an exemplary wind turbine blade 10. The wind turbine blade 10 has the shape of a conventional wind turbine blade with a root end and a tip end and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts, a first blade shell part 24 and a second blade shell part 26, typically made of fibre-reinforced polymer. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

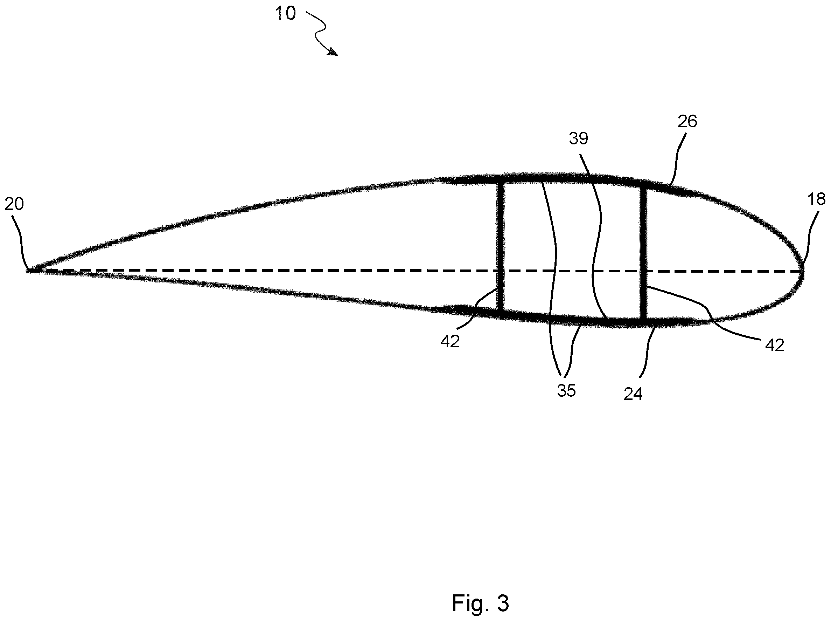

Fig. 3 is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24 and a suction side 26. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The wind turbine blade comprises an inner surface 39.

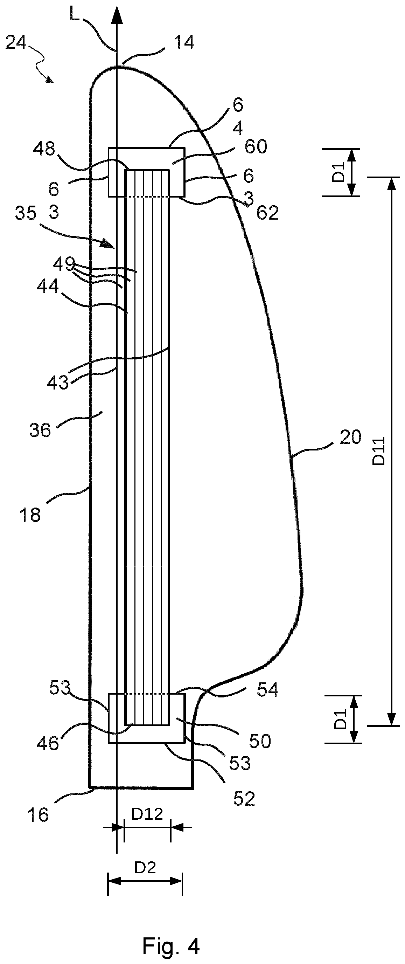

Fig. 4 is a schematic diagram illustrating an exemplary part of a wind turbine blade, e.g. a top view of a first shell part 24 seen from the suction side. The wind turbine blade 10 comprises a leading edge 18, a trailing edge 20, a tip 14 and a root 16.

The wind turbine blade 10 comprises a reinforced section 35. In a preferred embodiment, the reinforced section is an integrated reinforced section. Advantageously, the integrated reinforced section forms at least a part of a spar cap or spar beam of the wind turbine. The wind turbine blade comprises a shell 37 onto which the reinforced section is arranged. The reinforced section 35 may comprise an optional base part (not shown) and a pultrusion layer 44. The base part of the reinforced section may comprise fibres, such as glass fibres. The pultrusion layer 44 extends between the proximal edge 46 and the distal edge 48 in a direction parallel to the longitudinal axis L of the wind turbine blade 10, i.e. in a substantially spanwise direction. The pultrusion layer 44 also comprises two opposing lateral edges 43. The proximal edge 46 of the pultrusion layer is closer to the blade root 16 than the distal edge 48 of the pultrusion layer. The distal edge 48 is closer to the tip 14. The pultrusion layer 44 comprises a plurality of pultruded members 49 grouped together and may comprise fibres, such as glass fibres.

The first shell part 24 comprises a first inlay 50 and a second inlay 60 arranged underneath the pultrusion layer 44. The first inlay 50 and second inlay 60 extend in a substantially chordwise. The first inlay 50 extends in a substantially chordwise direction and comprises a proximal edge 52 and a distal edge 54 and two opposing lateral edges 53. The proximal edge 52 of the first inlay is closer to the blade root 16 than the distal edge 54 of the first inlay. The distal edge 54 of the first inlay is closer to the blade tip 14 than the proximal edge 52 of the first inlay. The first inlay 50 is arranged such that it extends underneath the entire proximal edge 46 of the pultrusion layer 44. The distal edge 54 of the first inlay is longer than the proximal edge 46 of the pultrusion layer. Alternatively, the distal edge 54 of the first inlay and the proximal edge 46 of the pultrusion layer may be the same. By providing an inlay with at least the same width as the pultrusion layer edge, the entire width of the end of the laminate may be supported by the inlay.

The second inlay 60 extends in a substantially chordwise direction and comprises a proximal edge 62 and a distal edge 64 and two opposing lateral edges 63. The proximal edge 62 of the second inlay is closer to the blade root 16 than the distal edge 64 of the second inlay. The distal edge 64 of the second inlay is closer to the blade tip 14 than the proximal edge 62 of the second inlay. The second inlay 60 is arranged such that it extends underneath the entire distal edge 48 of the pultrusion layer. The proximal edge 62 of the second inlay is longer than the distal edge 48 of the pultrusion layer. Alternatively, the proximal edge 62 of the second inlay and the distal edge 48 of the pultrusion layer may be the same.

The first inlay 50 is arranged closer to the blade root 16 than the second inlay 60. The second inlay 60 is arranged closer to the blade tip 14 than the first inlay 50. The pultrusion layer 44 is thus supported by the first inlay 50 and the second inlay 60 at its respective ends, e.g. at its proximal edge 46 and distal edge 48.

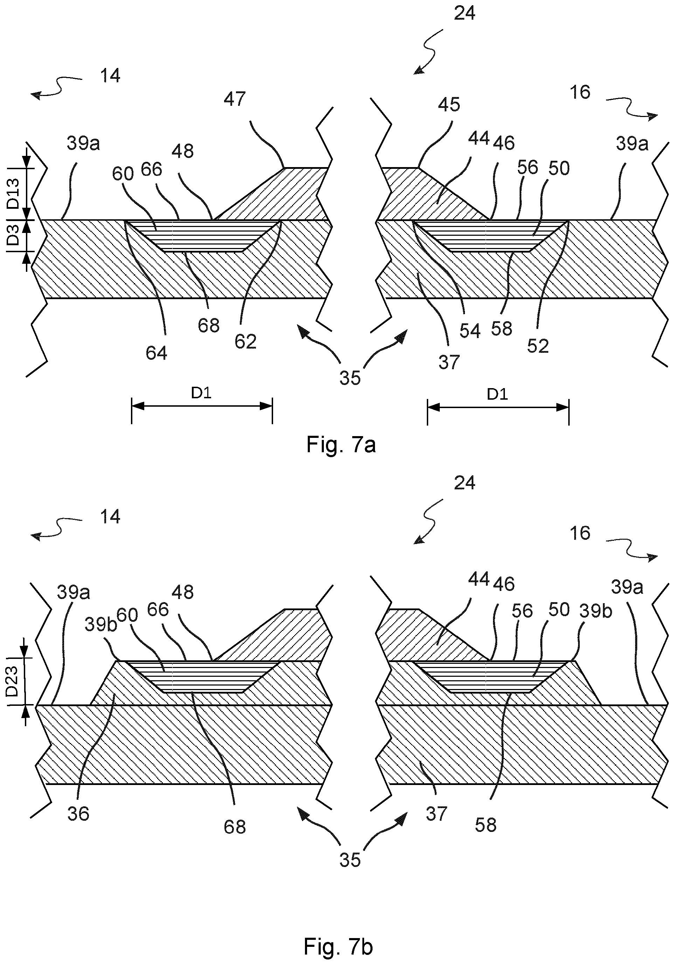

The inlays typically have a length LPL of 20-100 cm, a width WPL of 30-150 cm and a thickness of 0.5-10 mm (not shown, see e.g. Fig. 7a). The pultrusion layer typically has a length of 40-80 m, a width of 20-100 cm and a thickness of 5-80 mm (not shown, see e.g. Fig. 7a).

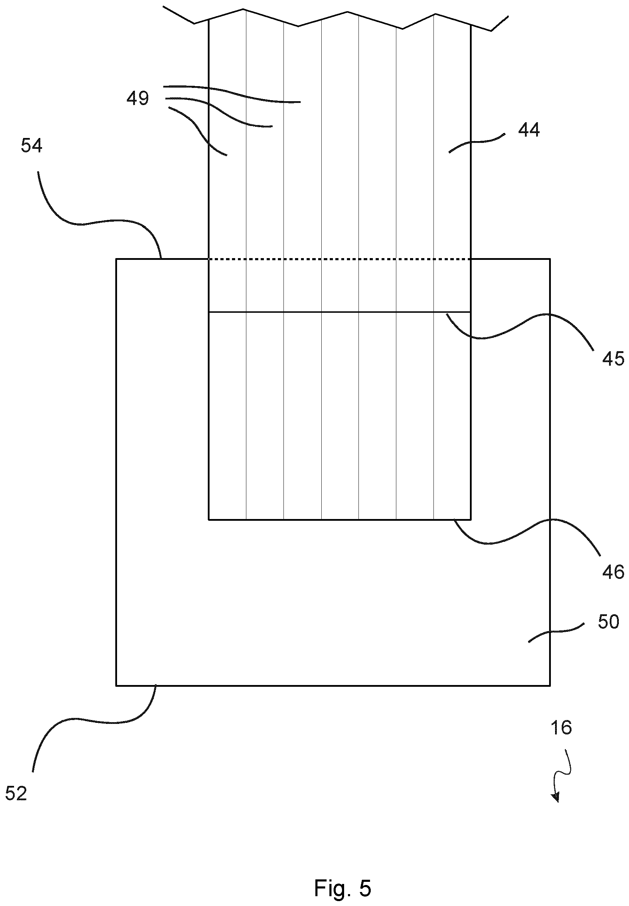

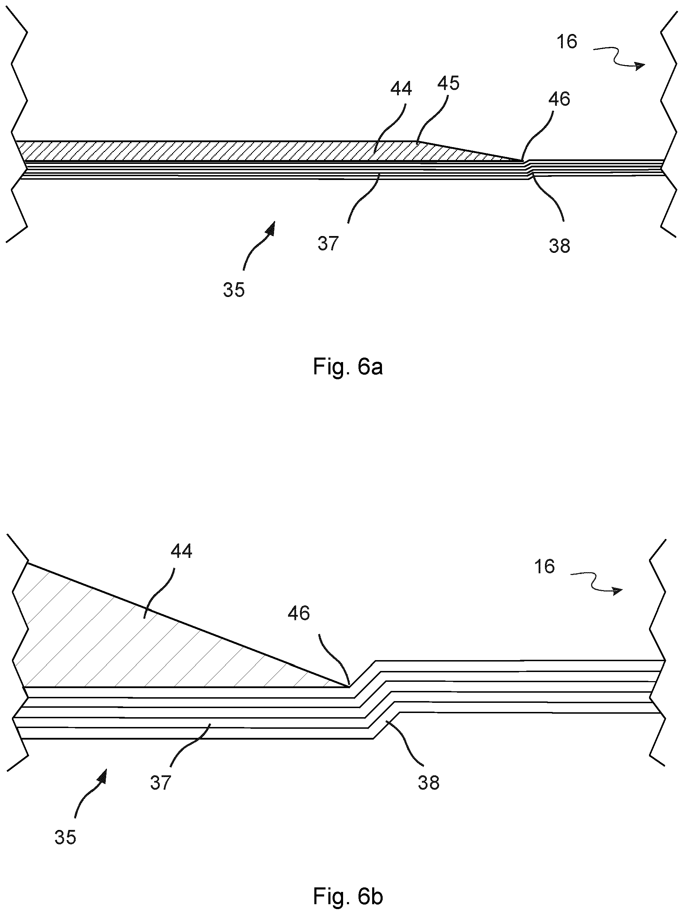

Fig. 5 is a schematic diagram illustrating an exemplary inlay and a pultrusion layer 44, such as the first inlay 50 and the pultrusion layer 44. The first inlay comprises a proximal edge 52 and a distal edge 54 and supports a pultrusion layer 44. The pultrusion layer 44 comprises a plurality of pultruded members 49 grouped together. The pultrusion layer 44 extends from proximal edge 46 to a distal edge (not shown) in a spanwise direction of the blade. The thickness of the pultrusion layer 44 tapers from a first pultrusion layer point 45 towards the proximal edge 46 (as best seen in Fig. 6a).

Fig. 6a-6b are schematic diagrams illustrating an exemplary part of a wind turbine blade, such as the reinforced section of a wind turbine blade seen form the leading edge or the trailing edge. Fig. 6a and 6b illustrates the prior art, where a pultrusion layer 44, is arranged on top of a shell 37 comprising fibres, such as glass fibres. During infusion of the wind turbine blade where the shell 37 and the pultrusion layer 44 is infused with resin, e.g. during vacuum assisted resin transfer moulding (VARTM), the shell 37 may be compressed to form wrinkles 38 at the edge 46 of the pultrusion layer. By arranging an inlay underneath the edge 46 of the pultrusion layer, the risk of wrinkles occurring in the shell is reduced.

Fig. 7a-7d are schematic diagrams illustrating an exemplary part of a wind turbine blade, such as the reinforced section 35 of a first shell part 24 seen from the leading edge or trailing edge. The first shell part 24 comprises a shell 37 with an inner surface 39a or a base part 36 with a top surface 39b, wherein the inner surface 39a or the top surface 39b may comprise one or more cavities as illustrated in Figs. 7a-d, a pultrusion layer 44, a first inlay 50 and a second inlay 60. The shell 37 comprises fibre material, such as glass fibres, such as mats of glass fibres. The ends of the mats of glass fibres may be chamfered. The fibre direction may be in the spanwise direction of the wind turbine blade. The pultrusion layer 44 is tapered from a first pultrusion layer point 45 towards the proximal edge 46 and tapered from a second pultrusion layer point 47 towards the distal edge 48.

The first inlay 50 is arranged underneath the proximal edge 46 of the pultrusion layer and the second inlay 60 is arranged underneath the distal edge 48 of the pultrusion layer. The first inlay 50 and the second inlay 60 are arranged such that the top surface 56 of the first inlay and the top surface 66 of the second inlay are flush with the adjacent inner surface 39a of the first shell part 24. The first inlay 50 and the second inlay 60 comprise sheets of fibre material, such as sheets of glass fibre fabric and are stacked to form a preform. The sheets may comprise a binding agent or a tackifier, e.g. dry fabric or prepreg. The sheets may be consolidated or precured by e.g. by heating, to attach the sheets to each other, and to form a preform of an inlay.

In Fig. 7b, the first shell part 24 comprises a shell 37, a base part 36 with a top surface 39b, wherein the top surface 39b of the base part may comprise one or more cavities, a pultrusion layer 44, a first inlay 50 and a second inlay 60. The base part 36 comprises fibre material, such as glass fibres, such as mats of glass fibres. The ends of the mats of glass fibres may be chamfered. The fibre direction may be in the spanwise direction of the wind turbine blade.

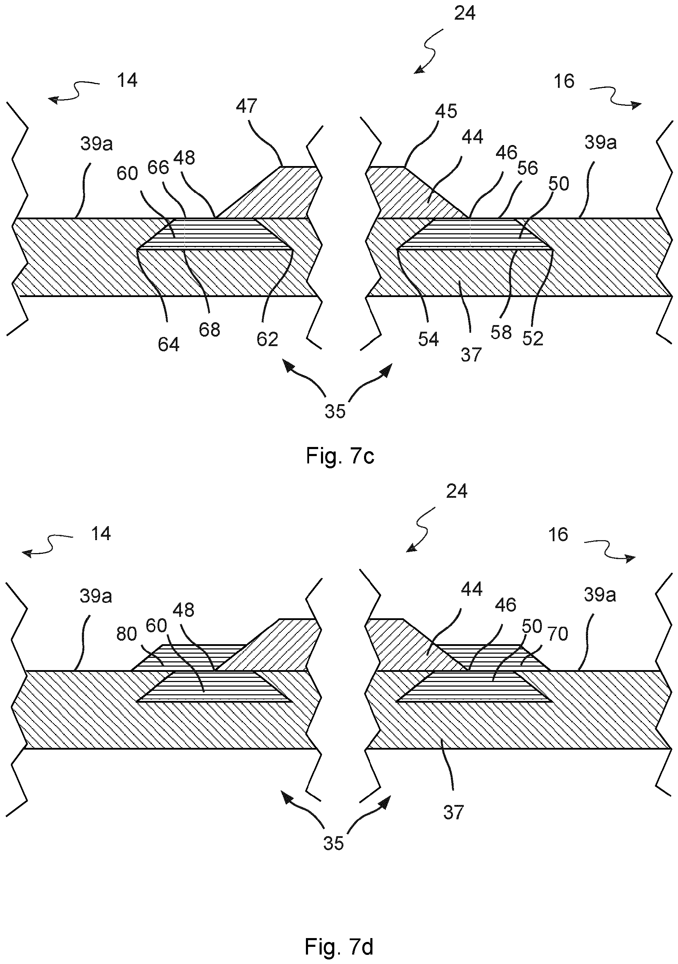

In Fig. 7a and 7b the thickness of the first inlay 50 is tapered from the top surface 58 towards the bottom surface 56 and the thickness of the second inlay is tapered from the top surface 66 towards the bottom surface 68. In Fig. 7c the thickness of the first inlay 50 is tapered from the bottom surface 58 towards the top surface 56 and the thickness of the second inlay 60 is tapered from the bottom surface 68 towards the top surface 68. Alternatively, the thickness of the first inlay 50 may be tapered from the top surface 56 towards the bottom surface 58 and the thickness of the second inlay 60 may be tapered from the bottom surface 68 towards the top surface 66.

The inlays typically have a length D1 of 20-100 cm, a width D2 of 30-150 cm and a thickness D3 of 0.5-10 mm. The pultrusion layer typically has a length D11 of 40-80 m, a width D12 of 20-100 cm and a thickness D13 of 5-80 mm. The base part typically has a thickness D23 of 4-30 mm.

In Fig. 7d, a third inlay 70 and a fourth inlay 80 are arranged on top of part of the pultrusion layer 44. The third inlay 70 and the fourth inlay 80 extend in a substantially chordwise direction. The third inlay 70 is arranged on top of the proximal edge 46 of the pultrusion layer such that the third inlay 70 covers some of the tapered part of the pultrusion layer 44, the first inlay 50 and/or some of the inner surface 39a of the first shell part. The fourth inlay 80 is arranged on top of the distal edge 48 of the pultrusion layer such that the fourth inlay 80 covers some of the tapered part of the pultrusion layer 44, the second inlay 60 and/or some of the inner surface 39a of the first shell part. The thickness of third inlay 70 and the fourth inlay 80 may be tapered towards the inner surface 39a of the first shell part. The third inlay 70 and the fourth inlay 80 may be shaped to conform with the shape of the pultrusion layer 44 near the edges 46, 48.

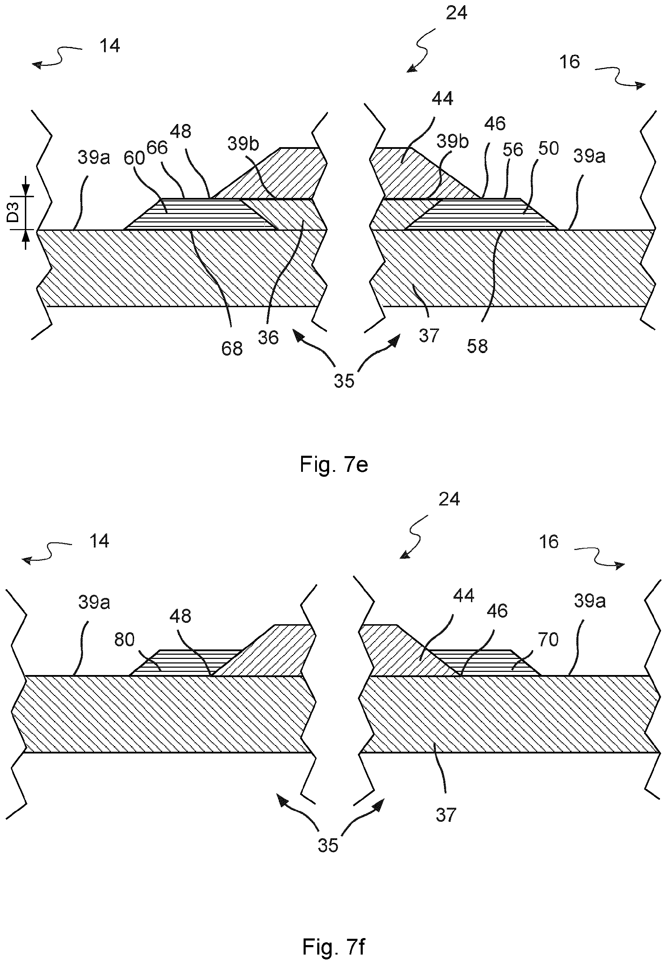

In fig. 7e the first inlay 50 and the second inlay 60 are arranged at each end of the base part 36. The top surface 39b of the base part 36 and the top surface of the first inlay 56 and the top surface of the second inlay 66 are substantially flush. The pultrusion layer 44 is arranged on top of the first inlay 50 and the second inlay 60 and the base part 36.

In Fig. 7f a third inlay 70 and a fourth inlay 80 are arranged at each end of the pultrusion layer 44 near the edges 46, 48. The third inlay 70 and fourth inlay 80 may reduce wrinkles in the shell 37 by providing a pressure on the shell around the edges 46, 48.

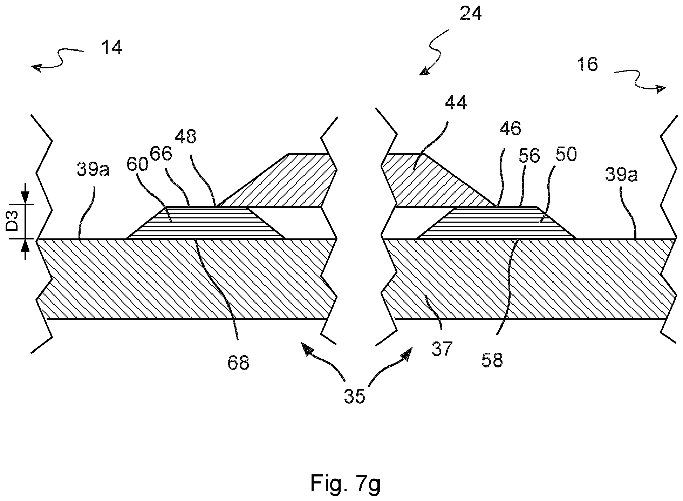

In Fig. 7g the first inlay 50 and the second inlay 60 are arranged on top of the inner surface 39a of the shell. The pultrusion layer 44 is arranged on top of the first inlay 50 and the second inlay 60 and the base part 36. In principle, there is no material supporting the pultrusion layer 44 except the first inlay 50 and the second inlay 60.

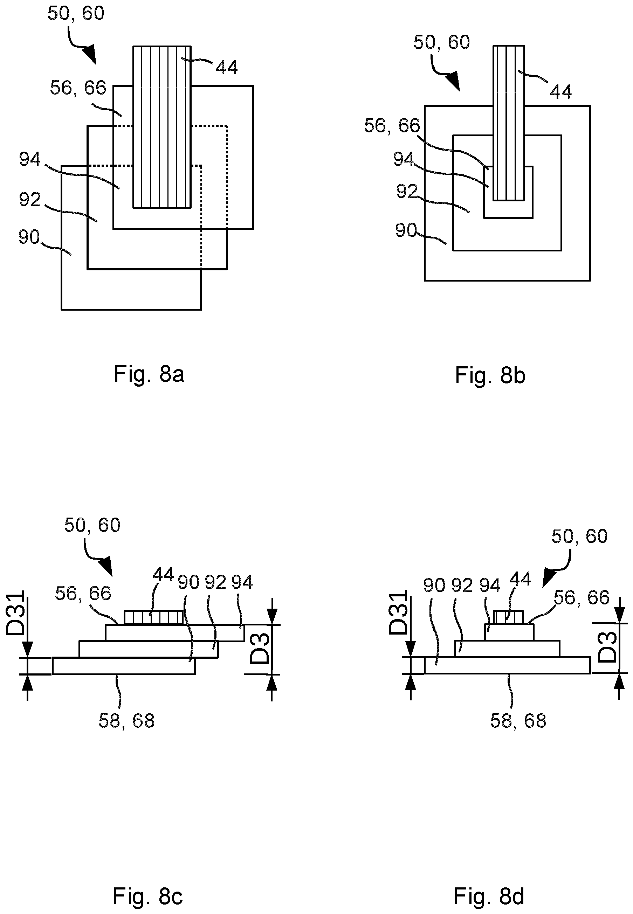

Fig. 8a-8d are schematic diagrams illustrating exemplary inlays, such as the first inlay 50 or the second inlay 60 of Figs. 7a-7e. The inlays 50, 60 comprises sheets, e.g. a first sheet 90, a second sheet 92 and a third sheet 94, of fibre material. Each of the sheets 90, 92, 94 has a thickness D31, which may be the same for all sheets.

The inlay 50, 60 is made of sheets 90, 92, 94 arranged on top of each other. In Fig. 8a and 8c, the size of the sheets 90, 92, 94 may be the same, e.g. they may have the same width and length. The second sheet 92 may be stacked on top of the first sheet 90 with an offset. The third sheet 94 may be stacked on top of the second sheet 92 with an offset, e.g. an offset in the same direction as the offset of the second sheet. A pultrusion layer, such as the pultrusion layer 44 of Figs. 4-7, may be arranged on top of the third sheet 94. The pultrusion layer 44 may extend from an area where the thickness of the inlay is thickest.

The inlay 50, 60 of Fig. 8b and 8d comprises sheets with different sizes, e.g. different widths and lengths, arranged on top of each other. The sheets may decrease in size, e.g. decrease in width and/or length, from the bottom surface 58, 68 to the top surface 56, 66. The sheets may have a size difference of for example 50 mm, e.g. first sheet 90 may have the length and width of 200 x 200 mm, the second sheet 92 may have the length and width of 150 x 150 mm, the third 94 sheet may have the length and width of 100 x 100 mm.

The thickness of each sheet may be between 0.2-0.8 mm, such as around 0.6 mm. The inlay 50, 60 comprising the sheets 90, 92, 94 has a thickness D3. The thickness D3 may be between 0.6-2.4 mm, such as around 1.8 mm.

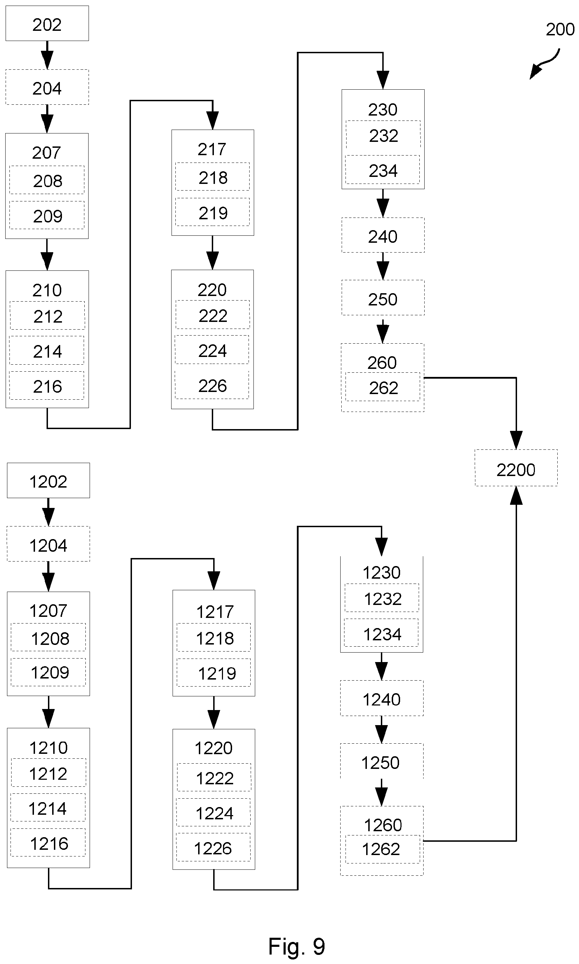

For illustrative purposes the sheets are illustrated with straight ends. However, the ends may be chamfered, such as illustrated in Fig. 7. Fig. 9 is a block diagram of an exemplary method 200 for manufacturing a reinforced shell part for a wind turbine blade.

The method 200 comprises providing 202 a shell, such as a shell half, such as a pressure side shell half. The method 200 may optionally comprise arranging 204 a plurality of fibre layers on an inner surface of the shell to from a base part of a reinforced section.

The method 200 may comprise providing 207 a preform for a first inlay. Providing 207 the preform of the first inlay may comprise stacking 208 sheets of fibres, such as sheets of glass fibres, on top of each other. Each sheet may comprise a binding agent, such as glue. Providing 207 the preform of the first inlay may comprise consolidating 209 the sheets to form a preform with a harder and stiffer property.

The method 200 comprises arranging 210 a preform of a first inlay on the inner surface of the shell and/or on the base part of the reinforced section. Arranging 210 the preform of the first inlay may comprise arranging 212 the preform of the first inlay such that it is closer to the root end of the blade than the preform of the second inlay. Arranging 210 the preform of the first inlay may comprise arranging 214 the preform of the first inlay such that it extends underneath the entire proximal edge of a pultrusion layer. Arranging 210 the preform of the first inlay may comprise arranging 216 the preform of the first inlay such that a proximal edge of the preform of the first inlay is closer to the root than a proximal edge of a pultrusion layer.

The method 200 may comprise providing 217 a preform for a second inlay. Providing 217 the preform of the second inlay may comprise stacking 218 sheets of fibres, such as sheets of glass fibres, on top of each other. Each sheet may comprise a binding agent, such as glue. Providing 217 the preform of the second inlay may comprise consolidating 219 the sheets to form a preform with a harder and stiffer property.

The method 200 comprises arranging 220 a preform of a second inlay on the inner surface of the shell and/or on the base part of the reinforced section. Arranging 220 the preform of the second inlay may comprise arranging 222 the preform of the second inlay such that it is closer to the tip end of the blade than the preform of the first inlay. Arranging 220 the preform of the second inlay may comprise arranging 224 the preform of the second inlay such that it extends underneath the entire distal edge of a pultrusion layer. Arranging 220 the preform of the second inlay may comprise arranging 226 the preform of the second inlay such that a distal edge of the preform of the second inlay is closer to the tip than a distal edge of a pultrusion layer.

The method 200 comprises arranging 230 at least one pultrusion layer on the preform of the first inlay, the preform of the second inlay, the inner surface of the shell and/or on the base part of the reinforced section. The pultrusion layer comprises a plurality of pultruded members grouped together and the pultrusion layer is arranged in a spanwise direction of the blade. Arranging 230 the pultrusion layer comprises arranging 232 the pultrusion layer such that a proximal edge of the pultrusion layer is arranged on the preform of first inlay and a distal edge of the pultrusion layer is arranged on the preform of the second inlay. Arranging 230 the pultrusion layer may comprise arranging 234 the pultrusion layer such that that its proximal edge is closer to the root end of the blade than its distal end.

The method 200 may comprise arranging 240 a preform of a third inlay and/or arranging 250 a preform of a fourth inlay on top of the inner surface of the shell and/or at least a part of the base part of the reinforced section.

The method 200 may comprise infusing 260 the pultrusion layer, the preform of the first inlay, the preform of the second inlay, and optionally the base part of the reinforced section with a resin to form a reinforced section of the shell part of the wind turbine blade. Infusing 260 the pultrusion layer, the preform of the first inlay, the preform of the second inlay, and optionally the base part of the reinforced section with a resin may comprise applying 262 vacuum, such as during vacuum assisted resin transfer moulding (VARTM).

The method 200 may comprise manufacturing a second reinforced shell part. Manufacturing a second reinforced shell part comprises providing 1202 a second shell, such as a shell half, such as a suction side shell. The method may comprise arranging 1204 a plurality of fibre layers on an inner surface of the second shell to from a base part of a reinforced section.

The method 200 may comprise providing 1207 a preform for a first inlay. Providing 1207 the preform of the first inlay may comprise stacking 1208 sheets of fibres, such as sheets of glass fibres, on top of each other. Each sheet may comprise a binding agent, such as glue. Providing 1207 the preform of the first inlay may comprise consolidating 1209 the sheets to form a preform with a harder and stiffer property.

The method 200 may comprise arranging 1210 a preform of a first inlay on the inner surface of the second shell and/or on the base part of the reinforced section. Arranging 1210 the preform of the first inlay may comprise arranging 1212 the preform of the first inlay such that it is closer to the root end of the blade than the preform of the second inlay. Arranging 1210 the preform of the first inlay may comprise arranging 1214 the preform of the first inlay such that it extends underneath the entire proximal edge of the pultrusion layer. Arranging 1210 the preform of the first inlay may comprise arranging 1216 the preform of the first inlay such that a proximal edge of the preform of the first inlay is closer to the root than a proximal edge of the pultrusion layer.

The method 200 may comprise providing 1217 a preform for a second inlay. Providing 1217 the preform of the second inlay may comprise stacking 1218 sheets of fibres, such as sheets of glass fibres, on top of each other. Each sheet may comprise a binding agent, such as glue. Providing 1217 the preform of the second inlay may comprise consolidating 1219 the sheets to form a preform with a harder and stiffer property.

The method 200 may comprise arranging 1220 a preform of a second inlay on the inner surface of the second shell and/or on the base part of the reinforced section. Arranging 220 the preform of the second inlay may comprise arranging 1222 the preform of the second inlay such that it is closer to the tip end of the blade than the preform of the first inlay. Arranging 1220 the preform of the second inlay may comprise arranging 1224 the preform of the second inlay such that it extends underneath the entire distal edge of the pultrusion layer. Arranging 1220 the preform of the second inlay may comprise arranging 1226 the preform of the second inlay such that a distal edge of the preform of the second inlay is closer to the tip than a distal edge of the pultrusion layer.

The method 200 may comprise arranging 1230 at least one pultrusion layer on the preform of the first inlay, the preform of the second inlay, the inner surface of the shell of the base part of the reinforced section. The pultrusion layer comprises a plurality of pultruded members grouped together and the pultrusion layer is arranged in a spanwise direction of the blade. Arranging 1230 the pultrusion layer may comprise arranging 1232 the pultrusion layer such that a proximal edge of the pultrusion layer is arranged on the preform of first inlay and a distal edge of the pultrusion layer is arranged on the preform of the second inlay. Arranging 1230 the pultrusion layer may comprise arranging 1234 the pultrusion layer such that that its proximal edge is closer to the root end of the blade than its distal end.

The method 200 may comprise arranging 1240 a preform of a third inlay and/or arranging 1250 a preform of a fourth inlay on top of the inner surface of the second shell and/or the base part of the reinforced section.

The method 200 may comprise infusing 1260 the pultrusion layer, the preform of the first inlay, the preform of the second inlay, and optionally the base part of the reinforced section with a resin to form a reinforced section of the second shell part of the wind turbine blade. Infusing 1260 the pultrusion layer, the preform of the first inlay, the preform of the second inlay, and optionally the base part of the reinforced section with a resin may comprise applying 1262 vacuum, such as during vacuum assisted resin transfer moulding (VARTM).

The method 200 may comprise joining 2200 the two shell parts such that the inner surface of the two shells face each other to form a wind turbine blade.

The invention has been described with reference to preferred embodiments. However, the scope of the invention is not limited to the illustrated embodiments, and alterations and modifications can be carried out without deviating from the scope of the invention.

### LIST OF REFERENCES

- 2: wind turbine
- 4: tower
- 6: nacelle
- 8: hub
- 10: blade
- 14: blade tip
- 16: blade root
- 18: leading edge
- 20: trailing edge
- 24: first blade shell part (pressure side)
- 26: second blade shell part (suction side)
- 28: bond lines/glue joints
- 30: root region
- 32: transition region
- 34: airfoil region
- 35: reinforced section
- 36: base part
- 37: shell
- 38: wrinkles
- 39a: inner surface
- 39b: top surface
- 40: shoulder
- 42: shear web or spar side
- 43: lateral edge of pultrusion layer
- 44: pultrusion layer
- 45: first pultrusion layer point
- 46: proximal edge of pultrusion layer
- 47: second pultrusion layer point
- 48: distal edge of pultrusion layer
- 49: pultruded member
- 50: first inlay
- 52: proximal edge of first inlay
- 53: lateral edge of first inlay
- 54: distal edge of first inlay
- 56: top surface of first inlay
- 58: bottom surface of first inlay
- 60: second inlay
- 62: proximal edge of second inlay
- 64: distal edge of second inlay
- 66: top surface of second inlay
- 68: bottom surface of second inlay
- 70: third inlay
- 80: fourth inlay
- 90: first sheet
- 92: second sheet
- 94: third sheet

- D1: length inlay
- D2: width inlay
- D3: thickness inlay
- D31: thickness first sheet
- D11: length pultrusion layer
- D12: width pultrusion layer
- D13: thickness pultrusion layer
- D23: thickness base part

- 200: method
- 202: providing shell
- 204: arranging fibre layers
- 207: providing first preform
- 208: stacking sheets
- 209: consolidating sheets
- 210: arranging first preform
- 212: arranging first preform closer to root end
- 214: arranging first preform underneath proximal edge of pultrusion layer
- 217: providing second preform
- 218: stacking sheets
- 219: consolidating sheets
- 220: arranging second preform
- 222: arranging second preform closer to tip end
- 224: arranging second preform underneath distal edge of pultrusion layer
- 230: arranging pultrusion layer
- 232: arranging proximal edge of pultrusion layer on first preform and distal edge of pultrusion layer on second preform
- 234: arranging proximal edge closer to the root
- 240: arranging third preform
- 250: arranging fourth preform
- 260: infusing
- 262: applying vacuum
- 1202: providing shell
- 1204: arranging fibre layers
- 1207: providing first preform
- 1208: stacking sheets
- 1209: consolidating sheets
- 1210: arranging first preform
- 1212: arranging first preform closer to root end
- 1214: arranging first preform underneath proximal edge of pultrusion layer
- 1217: providing second preform
- 1218: stacking sheets
- 1219: consolidating sheets
- 1220: arranging second preform
- 1222: arranging second preform closer to tip end
- 1224: arranging second preform underneath distal edge of pultrusion layer
- 1230: arranging pultrusion layer
- 1232: arranging proximal edge of pultrusion layer on first preform and distal edge of pultrusion layer on second preform
- 1234: arranging proximal edge closer to the root
- 1240: arranging third preform
- 1250: arranging fourth preform
- 1260: infusing
- 2200: joining

## Claims

1. A method for manufacturing a reinforced shell part (24) for a wind turbine blade comprising:
- providing a shell having an inner surface (39a),
- optionally arranging a plurality of fibre layers on the inner surface of the shell to form a base part (36) of a reinforced section,
- providing a preform of a first inlay (50),
- arranging the preform of the first inlay on the inner surface of the shell and/or on the base part (36) of the reinforced section,
- providing a preform of a second inlay (60),
- arranging the preform of the second inlay on the inner surface of the first shell part and/or on the base part of the reinforced section,
- arranging at least one pultrusion layer (44) on
• the preform of the first inlay (50),
• the preform of the second inlay (60), and
• the inner surface (39a) of the shell and/or the base part (36) of the reinforced section
wherein the pultrusion layer (44) comprises a plurality of pultruded members (49) grouped together, the pultrusion layer having a proximal edge (46), a distal edge (48) and two opposing lateral edges (43), and wherein the pultrusion layer is arranged in a spanwise direction of the blade such that the proximal edge (46) of the pultrusion layer is arranged on the preform of the first inlay (50) and the distal edge (48) of the pultrusion layer is arranged on the preform of the second inlay (60), **characterized in that**
the top surfaces (56, 66) of the first inlay and of the second inlay are substantially flush with the surrounding inner surface of the shell (37) or with the top surface of the base part of the reinforcing section.

2. Method according to claim 1, wherein providing a preform of a first inlay comprises precuring the preform of the first inlay (50) and/or providing a preform of a second inlay (60) comprises precuring the preform of the second inlay.

3. Method according to any of the preceding claims, wherein the shell comprises a root end (16) and a tip end (14), and wherein the preform of the first inlay is arranged closer to the root end of the shell than the preform of the second inlay.

4. Method according to any of the preceding claims, wherein the pultrusion layer (44) is arranged such that its proximal edge is closer to the root end of the shell than its distal end.

5. Method according to any of the preceding claims, wherein the preform of the first inlay is arranged such that it extends along the entire proximal edge of the pultrusion layer (44) and/or the preform of the second inlay is arranged such that it extends along the entire distal edge of the pultrusion layer (44).

6. Method according to any of the preceding claims, wherein each of the preforms has a proximal edge, a distal edge, and two opposing lateral edges, and wherein the preform of the first inlay is arranged such that its proximal edge is closer to the root end of the shell than the proximal edge of the pultrusion layer (44) and/or wherein the preform of the second inlay is arranged such that its distal edge is closer to the tip end of the shell than the distal edge of the pultrusion layer (44).

7. Method according to any of the preceding claims, wherein the distal edge of the preform of the first inlay is longer than the proximal edge of the pultrusion layer (44) and/or wherein the proximal edge of the preform of the second inlay is longer than the distal edge of the pultrusion layer (44).

8. Method according to any of the preceding claims, wherein the method comprises infusing the pultrusion layer (44), the preform of the first inlay, the preform of the second inlay, and optionally the base part of the reinforced section with a resin to form a reinforced section of the first shell part the wind turbine blade.

9. Method according to any of the preceding claims, wherein a preform of a third inlay is arranged on top of at least part of the pultrusion layer (44) such that it extends along the entire proximal edge of the pultrusion layer (44), and a preform of a fourth inlay is arranged on top of at least part of the pultrusion layer (44) such that it extends along the entire distal edge of the pultrusion layer (44), the preform of the third inlay and the preform of the fourth inlay each extending in a substantially chordwise direction, the preform of the third inlay being arranged closer to the root end of the shell than the preform of the fourth inlay.

10. Method according to any of the preceding claims, wherein the thickness of the preform of the first inlay (50) tapers towards its distal edge and/or towards its proximal edge.

11. Method according to any of the preceding claims, wherein at least the preform of the first inlay (50) comprises sheets of fibres, and wherein the distal ends and/or the proximal ends of each sheet of fibre are chamfered.

12. Method according to any of the preceding claims, wherein each of the fibre layers of the reinforced section are chamfered at a distal end and/or a proximal end.

13. A wind turbine blade having a profiled contour including a pressure side and a suction side, and a leading edge and a trailing edge with a chord having a chord length extending therebetween, the wind turbine blade extending in a spanwise direction between a root end and a tip end, the wind turbine blade comprising a shell part,
a reinforced section extending along at least part of the shell part in a spanwise direction of the blade, the reinforced section comprising a plurality of pultruded members grouped together to form at least one pultrusion layer (44) extending in a spanwise direction of the blade, wherein the pultrusion layer (44) has a proximal edge closest to the root end of the blade, a distal edge closest to the tip end of the blade and two opposing lateral edges extending in a spanwise direction of the blade,
a first inlay (50) arranged underneath the pultrusion layer (44) such that the first inlay extends along the entire proximal edge of the pultrusion layer (44), and
a second inlay (60) arranged underneath the pultrusion layer (44) such that the second inlay extends along the entire distal edge of the pultrusion layer, **characterized in that** the top surfaces (56, 66) of the first inlay and of the second inlay are substantially flush with the surrounding inner surface of the shell or with the top surface of the base part of the reinforcing section.

14. Wind turbine blade according to claim 13, wherein the thickness of first inlay (50) and/or the second inlay tapers towards its proximal edge and/or its distal edge.

15. Wind turbine blade according to any of the preceding claims 13-14, wherein the first inlay (50) and/or the second inlay comprises a stack of sheets of glass fibres comprising a binding agent.

## Patentansprüche

1. Verfahren zum Herstellen eines verstärkten Schalenteils (24) für einen Windkraftanlagenflügel, umfassend:
- Bereitstellen einer Schale mit einer inneren Oberfläche (39a),
- optionales Anordnen einer Vielzahl von Faserschichten auf der inneren Oberfläche der Schale, um einen Basisteil (36) eines verstärkten Abschnitts zu bilden,
- Bereitstellen eins Vorformlings einer ersten Einlage (50),
- Anordnen des Vorformlings der ersten Einlage auf der inneren Oberfläche der Schale und/oder auf dem Basisteil (36) des verstärkten Abschnitts,
- Bereitstellen eins Vorformlings einer zweiten Einlage (60),
- Anordnen des Vorformlings der zweiten Einlage auf der inneren Oberfläche des ersten Schalenteils und/oder auf dem Basisteil des verstärkten Abschnitts,
- Anordnen mindestens einer Pultrusionsschicht (44) auf
• dem Vorformling der ersten Einlage (50),
• dem Vorformling der zweiten Einlage (60) und
• der inneren Oberfläche (39a) der Schale und/oder dem Basisteil (36) des verstärkten Abschnitts,
wobei die Pultrusionsschicht (44) eine Vielzahl von miteinander gruppierten pultrudierten Elementen (49) umfasst, die Pultrusionsschicht eine proximale Kante (46), eine distale Kante (48) und zwei gegenüberliegende Seitenkanten (43) aufweist und wobei die Pultrusionsschicht derart in einer Spannenrichtung des Flügels angeordnet ist, dass die proximale Kante (46) der Pultrusionsschicht auf dem Vorformling der ersten Einlage (50) angeordnet ist und die distale Kante (48) der Pultrusionsschicht auf dem Vorformling der zweiten Einlage (60) angeordnet ist, **dadurch gekennzeichnet, dass**
die oberen Oberflächen (56, 66) der ersten Einlage und der zweiten Einlage im Wesentlichen mit der umgebenden inneren Oberfläche der Schale (37) oder mit der oberen Oberfläche des Basisteils des Verstärkungsabschnitts bündig sind.

2. Verfahren nach Anspruch 1, wobei das Bereitstellen eines Vorformlings einer ersten Einlage das Vorhärten des Vorformlings der ersten Einlage (50) umfasst und/oder das Bereitstellen eines Vorformlings einer zweiten Einlage (60) das Vorhärten des Vorformlings der zweiten Einlage umfasst.

3. Verfahren nach einem der vorangehenden Ansprüche, wobei die Schale ein Wurzelende (16) und ein Spitzenende (14) umfasst und wobei der Vorformling der ersten Einlage näher an dem Wurzelende der Schale angeordnet ist als der Vorformling der zweiten Einlage.

4. Verfahren nach einem der vorangehenden Ansprüche, wobei die Pultrusionsschicht (44) derart angeordnet ist, dass ihre proximale Kante näher an dem Wurzelende der Schale liegt als ihr distales Ende.

5. Verfahren nach einem der vorangehenden Ansprüche, wobei der Vorformling der ersten Einlage derart angeordnet ist, dass er sich entlang der gesamten proximalen Kante der Pultrusionsschicht (44) erstreckt, und/oder der Vorformling der zweiten Einlage derart angeordnet ist, dass er sich entlang der gesamten distalen Kante der Pultrusionsschicht (44) erstreckt.

6. Verfahren nach einem der vorangehenden Ansprüche, wobei die Vorformlinge jeweils eine proximale Kante, eine distale Kante und zwei gegenüberliegende Seitenkanten aufweisen und wobei der Vorformling der ersten Einlage derart angeordnet ist, dass seine proximale Kante näher an dem Wurzelende der Schale liegt als die proximale Kante der Pultrusionsschicht (44), und/oder wobei der Vorformling der zweiten Einlage derart angeordnet ist, dass seine distale Kante näher an dem Spitzenende der Schale liegt als die distale Kante der Pultrusionsschicht (44).

7. Verfahren nach einem der vorangehenden Ansprüche, wobei die distale Kante des Vorformlings der ersten Einlage länger ist als die proximale Kante der Pultrusionsschicht (44) und/oder wobei die proximale Kante des Vorformlings der zweiten Einlage länger ist als die distale Kante der Pultrusionsschicht (44).

8. Verfahren nach einem der vorangehenden Ansprüche, wobei das Verfahren das Tränken der Pultrusionsschicht (44), des Vorformlings der ersten Einlage, des Vorformlings der zweiten Einlage und optional des Basisteils des verstärkten Abschnitts mit einem Harz umfasst, um einen verstärkten Abschnitt des ersten Schalenteils des Windkraftanlagenflügels zu bilden.

9. Verfahren nach einem der vorangehenden Ansprüche, wobei ein Vorformling einer dritten Einlage derart auf mindestens einem Teil der Pultrusionsschicht (44) angeordnet ist, dass er sich entlang der gesamten proximalen Kante der Pultrusionsschicht (44) erstreckt, und ein Vorformling einer vierten Einlage derart auf mindestens einem Teil der Pultrusionsschicht (44) angeordnet ist, dass er sich entlang der gesamten distalen Kante der Pultrusionsschicht (44) erstreckt, wobei sich der Vorformling der dritten Einlage und der Vorformling der vierten Einlage jeweils im Wesentlichen in einer Sehnenrichtung erstrecken, der Vorformling der dritten Einlage näher an dem Wurzelende der Schale angeordnet ist als der Vorformling der vierten Einlage.

10. Verfahren nach einem der vorangehenden Ansprüche, wobei die Dicke des Vorformlings der ersten Einlage (50) in Richtung seiner distalen Kante und/oder in Richtung seiner proximalen Kante abnimmt.

11. Verfahren nach einem der vorangehenden Ansprüche, wobei mindestens der Vorformling der ersten Einlage (50) Faserfolien umfasst und wobei die distalen Enden und/oder die proximalen Enden jeder Faserfolie abgeschrägt sind.

12. Verfahren nach einem der vorangehenden Ansprüche, wobei die Faserschichten des verstärkten Abschnitts jeweils an einem distalen Ende und/oder einem proximalen Ende abgeschrägt sind.

13. Windkraftanlagenflügel mit einer Profilkontur, die eine Druckseite und eine Saugseite sowie eine Eintrittskante und eine Austrittskante mit einer sich dazwischen erstreckenden, eine Sehnenlänge aufweisenden Sehne umfasst, wobei sich der Windkraftanlagenflügel in einer Spannenrichtung zwischen einem Wurzelende und einem Spitzenende erstreckt, wobei der Windkraftanlagenflügel Folgendes einen Schalenteil umfasst,
wobei sich ein verstärkter Abschnitt entlang mindestens eines Teils des Schalenteils in einer Spannenrichtung des Flügels erstreckt, wobei der verstärkte Abschnitt eine Vielzahl von pultrudierten Elementen umfasst, die miteinander gruppiert sind, um mindestens eine sich in einer Spannenrichtung des Flügels erstreckende Pultrusionsschicht (44) zu bilden, wobei die Pultrusionsschicht (44) eine dem Wurzelende des Flügels nächstgelegene proximale Kante, eine dem Spitzenende des Flügels nächstgelegene distale Kante und zwei sich in einer Spannenrichtung des Flügels erstreckende gegenüberliegende Seitenkanten aufweist,
wobei eine erste Einlage (50) derart unter der Pultrusionsschicht (44) angeordnet ist, dass sich die erste Einlage entlang der gesamten proximalen Kante der Pultrusionsschicht (44) erstreckt, und
wobei eine zweite Einlage (60) derart unter der Pultrusionsschicht (44) angeordnet ist, dass sich die zweite Einlage entlang der gesamten distalen Kante der Pultrusionsschicht erstreckt,
**dadurch gekennzeichnet, dass** die oberen Oberflächen (56, 66) der ersten Einlage und der zweiten Einlage im Wesentlichen mit der umgebenden inneren Oberfläche der Schale oder mit der oberen Oberfläche des Basisteils des Verstärkungsabschnitts bündig sind.

14. Windkraftanlagenflügel nach Anspruch 13, wobei die Dicke der ersten Einlage (50) und/oder der zweiten Einlage in Richtung ihrer proximalen Kante und/oder ihrer distalen Kante abnimmt.

15. Windkraftanlagenflügel nach einem der vorangehenden Ansprüche 13-14, wobei die erste Einlage (50) und/oder die zweite Einlage einen Stapel von ein Bindemittel umfassenden Folien aus Glasfasern umfasst.

## Revendications

1. Procédé de fabrication d'une partie de coque renforcée (24) pour une pale d'éolienne comportant les étapes consistant à :
- mettre en oeuvre une coque ayant une surface intérieure (39a),
- éventuellement agencer une pluralité de couches de fibres sur la surface intérieure de la coque pour former une partie de base (36) d'une section renforcée,
- mettre en oeuvre une préforme d'une première incrustation (50),
- agencer la préforme de la première incrustation sur la surface intérieure de la coque et/ou sur la partie de base (36) de la section renforcée,
- mettre en oeuvre une préforme d'une deuxième incrustation (60),
- agencer la préforme de la deuxième incrustation sur la surface intérieure de la première partie de coque et/ou sur la partie de base de la section renforcée,
- agencer au moins une couche de pultrusion (44) sur
• la préforme de la première incrustation (50),
• la préforme de la deuxième incrustation (60), et
• la surface intérieure (39a) de la coque et/ou de la partie de base (36) de la section renforcée,
dans lequel la couche de pultrusion (44) comporte une pluralité d'éléments pultrudés (49) groupés ensemble, la couche de pultrusion ayant un bord proximal (46), un bord distal (48) et deux bords latéraux opposés (43), et dans lequel la couche de pultrusion est agencée dans une direction allant dans le sens de l'envergure de la pale de telle sorte que le bord proximal (46) de la couche de pultrusion est agencé sur la préforme de la première incrustation (50) et le bord distal (48) de la couche de pultrusion est agencé sur la préforme de la deuxième incrustation (60), **caractérisé en ce que** les surfaces supérieures (56, 66) de la première incrustation et de la deuxième incrustation sont sensiblement de niveau par rapport à la surface intérieure environnante de la coque (37) ou par rapport à la surface supérieure de la partie de base de la section de renfort.

2. Procédé selon la revendication 1, dans lequel l'étape consistant à mettre en oeuvre une préforme d'une première incrustation comporte l'étape consistant à effectuer une précuisson de la préforme de la première incrustation (50) et/ou l'étape consistant à mettre en oeuvre une préforme d'une deuxième incrustation (60) comporte l'étape consistant à effectuer une précuisson de la préforme de la deuxième incrustation.

3. Procédé selon l'une quelconque des revendications précédentes, dans lequel la coque comporte une extrémité de pied (16) et une extrémité de bout (14), et dans lequel la préforme de la première incrustation est agencée pour se trouver plus près de l'extrémité de pied de la coque par rapport à la préforme de la deuxième incrustation.

4. Procédé selon l'une quelconque des revendications précédentes, dans lequel la couche de pultrusion (44) est agencée de telle sorte que son bord proximal se trouve plus près de l'extrémité de pied de la coque par rapport à son extrémité distale.

5. Procédé selon l'une quelconque des revendications précédentes, dans lequel la préforme de la première incrustation est agencée de telle sorte qu'elle s'étend le long de la totalité du bord proximal de la couche de pultrusion (44) et/ou la préforme de la deuxième incrustation est agencée de telle sorte qu'elle s'étend le long de la totalité du bord distal de la couche de pultrusion (44).

6. Procédé selon l'une quelconque des revendications précédentes, dans lequel chacune de préformes a un bord proximal, un bord distal, et deux bords latéraux opposés, et dans lequel la préforme de la première incrustation est agencée de telle sorte que son bord proximal se trouve plus près de l'extrémité de pied de la coque par rapport au bord proximal de la couche de pultrusion (44) et/ou dans lequel la préforme de la deuxième incrustation est agencée de telle sorte que son bord distal se trouve plus près de l'extrémité de bout de la coque par rapport au bord distal de la couche de pultrusion (44).

7. Procédé selon l'une quelconque des revendications précédentes, dans lequel le bord distal de la préforme de la première incrustation est plus long par rapport au bord proximal de la couche de pultrusion (44) et/ou dans lequel le bord proximal de la préforme de la deuxième incrustation est plus long par rapport au bord distal de la couche de pultrusion (44).

8. Procédé selon l'une quelconque des revendications précédentes, dans lequel le procédé comporte l'étape consistant à infuser la couche de pultrusion (44), la préforme de la première incrustation, la préforme de la deuxième incrustation, et éventuellement la partie de base de la section renforcée au moyen d'une résine pour former une section renforcée de la première partie de coque de la pale d'éolienne.

9. Procédé selon l'une quelconque des revendications précédentes, dans lequel une préforme d'une troisième incrustation est agencée par-dessus au moins une partie de la couche de pultrusion (44) de telle sorte qu'elle s'étend le long de la totalité du bord proximal de la couche de pultrusion (44), et une préforme d'une quatrième incrustation est agencée par-dessus au moins une partie de la couche de pultrusion (44) de telle sorte qu'elle s'étend le long de la totalité du bord distal de la couche de pultrusion (44), la préforme de la troisième incrustation et la préforme de la quatrième incrustation s'étendant chacune dans une direction allant sensiblement dans le sens de la corde, la préforme de la troisième incrustation étant agencée pour se trouver plus près de l'extrémité de pied de la coque par rapport à la préforme de la quatrième incrustation.

10. Procédé selon l'une quelconque des revendications précédentes, dans lequel l'épaisseur de la préforme de la première incrustation (50) va en s'effilant vers son bord distal et/ou vers son bord proximal.

11. Procédé selon l'une quelconque des revendications précédentes, dans lequel au moins la préforme de la première incrustation (50) comporte des feuilles de fibres, et dans lequel les extrémités distales et/ou les extrémités proximales de chaque feuille de fibres sont chanfreinées.

12. Procédé selon l'une quelconque des revendications précédentes, dans lequel chacune des couches de fibres de la section renforcée est chanfreinée au niveau d'une extrémité distale et/ou d'une extrémité proximale.

13. Pale d'éolienne ayant un contour profilé comprenant un côté en pression et un côté en dépression, et un bord d'attaque et un bord de fuite avec une corde ayant une longueur de corde s'étendant entre eux, la pale d'éolienne s'étendant dans une direction allant dans le sens de l'envergure entre une extrémité de pied et une extrémité de bout, la pale d'éolienne comportant une partie de coque,
une section renforcée s'étendant le long d'au moins une partie de la partie de coque dans une direction allant dans le sens de l'envergure de la pale, la section renforcée comportant une pluralité d'éléments pultrudés groupés ensemble pour former au moins une couche de pultrusion (44) s'étendant dans une direction allant dans le sens de l'envergure de la pale, dans laquelle la couche de pultrusion (44) a un bord proximal se trouvant le plus près de l'extrémité de pied de la pale, un bord distal se trouvant le plus près de l'extrémité de bout de la pale et deux bords latéraux opposés s'étendant dans une direction allant dans le sens de l'envergure de la pale, une première incrustation (50) agencée sous la couche de pultrusion (44) de telle sorte que la première incrustation s'étend le long de la totalité du bord proximal de la couche de pultrusion (44), une deuxième incrustation (60) agencée sous la couche de pultrusion (44) de telle sorte que la deuxième incrustation s'étend le long de la totalité du bord distal de la couche de pultrusion, **caractérisée en ce que** les surfaces supérieures (56, 66) de la première incrustation et de la deuxième incrustation sont sensiblement de niveau par rapport à la surface intérieure environnante de la coque ou par rapport à la surface supérieure de la partie de base de la section de renfort.

14. Pale d'éolienne selon la revendication 13, dans laquelle l'épaisseur de la première incrustation (50) et/ou de la deuxième incrustation va en s'effilant vers son bord proximal et/ou son bord distal.

15. Pale d'éolienne selon l'une quelconque des revendications précédente 13 et 14, dans laquelle la première incrustation (50) et/ou la deuxième incrustation comporte une pile de feuilles de fibres de verre comportant un agent liant.
